# EUROPEAN PATENT SPECIFICATION

(11) **EP 3 139 000 B1**
(45) Date of publication and mention of the grant of the patent: **13.12.2023**
(21) Application number: 16184881.7
(22) Date of filing: 19.08.2016
(51) Int. Cl.: F01D 5/22

(54) **DAMPER PIN FOR DAMPING ADJACENT TURBINE BLADES COUPLED TO A ROTOR SHAFT AND TURBINE ENGINE**
DÄMPFENDER STIFT ZUM DÄMPFEN VON NEBENSTEHENDEN AN EINER ROTORWELLE GEKOPPELTEN TURBINENSCHAUFELN UND TURBINENKRAFTWERK
GOUPILLE AMORTISSANTE POUR AMORTIR DES AUBES DE TURBINE ADJACENTES COUPLÉES À UN ARBRE DE ROTOR ET MOTEUR À TURBINE

(30) Priority: 03.09.2015 US 201514844317
(43) Date of publication of application: 08.03.2017
(73) Proprietor: General Electric Technology GmbH, 5400 Baden (CH)
(72) Inventor: KAREFF, Spencer A., Greenvile, SC South Carolina 29615 (US); POTTER, Brian Denve, Greenville, SC South Carolina 29615 (US); JACALA, Ariel Caesar Prepena, Greenvile, SC South Carolina 29615 (US)
(74) Representative: Novagraaf Group

(56) References cited:
- EP-A1- 2 500 525
- EP-A1- 3 043 085
- EP-A1- 3 070 274
- CH-A- 418 360
- US-A- 2 912 223
- US-A- 3 037 741
- US-A- 3 881 844

## Description

### FIELD OF THE INVENTION

The present invention generally relates to a turbomachine having multiple circumferentially aligned turbine blades. More precisely, the present invention relates to a damper pin for damping adjacent turbine blades coupled to a rotor shaft, and also relates to a turbine engine. More particularly, this invention involves a damper pin having a spring member for providing vibration damping between adjacent turbine blades.

### BACKGROUND OF THE INVENTION

A turbine blade, also known as a turbine bucket or turbine rotor blade, converts energy from a flowing fluid such as hot combustion gas or steam into mechanical energy by causing a rotor shaft of a turbomachine to rotate. As the turbomachine transitions through various operating modes, the turbine blades are subjected to both mechanical and thermal stresses.

A turbine blade generally includes an airfoil that extends radially outwardly from a platform, a shank that extends radially inwardly from the platform and a dovetail or mounting portion that extends radially inwardly from the shank. The dovetail of each turbine blade is secured within a complementary slot defined in a rotor wheel or disk. The rotor wheel is coupled to the rotor shaft.

During engine operation, vibrations may be introduced into the turbine blades. For example, fluctuations in flow of the hot combustion gases or steam may cause them to vibrate. One basic design consideration for turbomachine designers is to avoid or to minimize resonance with natural frequencies of the turbine blades and the dynamic stresses produced by forced response and/or aero-elastic instabilities, thus controlling high cycle fatigue of the turbine blades. In order to improve the high cycle fatigue life of a turbine blade, vibration dampers are typically provided below and/or between the platforms to frictionally dissipate vibratory energy and reduce the corresponding amplitude of vibration during operation. The amount of vibrational energy that is removed by the vibration damper is a function of the dynamic weight of the vibration damper and the reaction loads. US 2912223 discloses a turbine bucket vibration dampener.

Although known dampers may be largely adequate during typical operations, there is a desire to improve overall damper effectiveness. Prior attempts to accomplish damping of vibrations have included round damper pins, sheet metal flat dampers, or complex wedge shaped dampers. Often true damper performance of these types of dampers is not known until the first engine test. However, at that time, the damper pocket geometry in the turbine blades is locked in by hard tooling. Thus, if the damper does not perform as expected, then a potentially expensive tooling rework may be required. Accordingly, there is desire for a damping pin that provides a natural frequency tuning tool for resonant mode excitation avoidance and that enables independent mode tuning options without necessitating changes to the design of an existing turbine blade.

### BRIEF DESCRIPTION OF THE INVENTION

Aspects and advantages of the invention are set forth below in the following description, or may be obvious from the description, or may be learned through practice of the invention.

One embodiment of the present invention is a damper pin according to claim 1.

Another embodiment of the present invention is a turbine engine according to claim 10.

Those of ordinary skill in the art will better appreciate the features and aspects of such embodiments, and others, upon review of the specification.

### BRIEF DESCRIPTION OF THE DRAWINGS

A full and enabling disclosure of the present invention is set forth more particularly in the remainder of the specification, including reference to the accompanying figures, in which:
FIG. 1 illustrates a functional diagram of an exemplary gas turbine as may incorporate at least one embodiment of the present invention;
FIG. 2 is a perspective view of a turbine blade of a turbine engine according to at least one embodiment of the present invention;
FIG. 3 is a schematic illustration of a damper pin disposed between circumferentially adjacent turbine blades according to at least one embodiment of the present invention;
FIG. 4 is a side view of a comparative example of a damper pin not according to the invention;
FIG. 5 is a top view of the damper pin as shown in FIG. 4; and
FIG. 6 is a cross sectioned side view of an exemplary damper pin according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

Although an industrial or land based gas turbine is shown and described herein, the present invention as shown and described herein is not limited to a land based and/or industrial gas turbine unless otherwise specified in the claims. For example, the invention as described herein may be used in any type of turbomachine including but not limited to a steam turbine, an aircraft gas turbine or marine gas turbine.

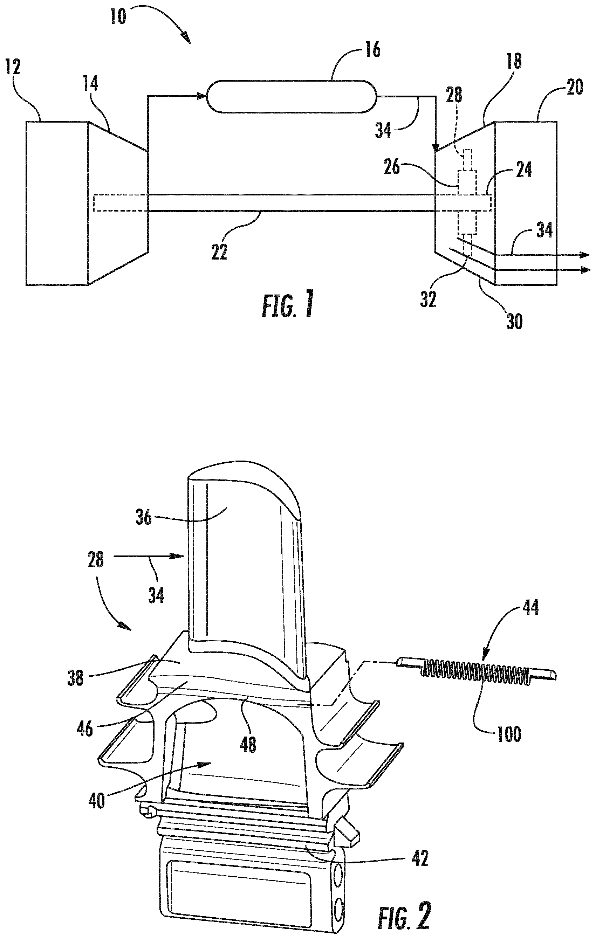

Referring now to the drawings, FIG. 1 illustrates a schematic diagram of one embodiment of a gas turbine 10. The gas turbine 10 generally includes an inlet section 12, a compressor section 14 disposed downstream of the inlet section 12, a plurality of combustors (not shown) within a combustor section 16 disposed downstream of the compressor section 14, a turbine section 18 disposed downstream of the combustor section 16 and an exhaust section 20 disposed downstream of the turbine section 18. Additionally, the gas turbine 10 may include one or more shafts 22 coupled between the compressor section 14 and the turbine section 18.

The turbine section 18 may generally include a rotor shaft 24 having a plurality of rotor disks 26 (one of which is shown) and a plurality of rotor blades 28 extending radially outwardly from and being interconnected to the rotor disk 26. Each rotor disk 26 in turn, may be coupled to a portion of the rotor shaft 24 that extends through the turbine section 18. The turbine section 18 further includes an outer casing 30 that circumferentially surrounds the rotor shaft 24 and the rotor blades 28, thereby at least partially defining a hot gas path 32 through the turbine section 18.

During operation, a working fluid such as air flows through the inlet section 12 and into the compressor section 14 where the air is progressively compressed, thus providing pressurized air to the combustors of the combustion section 16. The pressurized air is mixed with fuel and burned within each combustor to produce combustion gases 34. The combustion gases 34 flow through the hot gas path 32 from the combustor section 16 into the turbine section 18, wherein energy (kinetic and/or thermal) is transferred from the combustion gases 34 to the rotor blades 28, thus causing the rotor shaft 24 to rotate. The mechanical rotational energy may then be used to power the compressor section 14 and/or to generate electricity. The combustion gases 34 exiting the turbine section 18 may then be exhausted from the gas turbine 10 via the exhaust section 20.

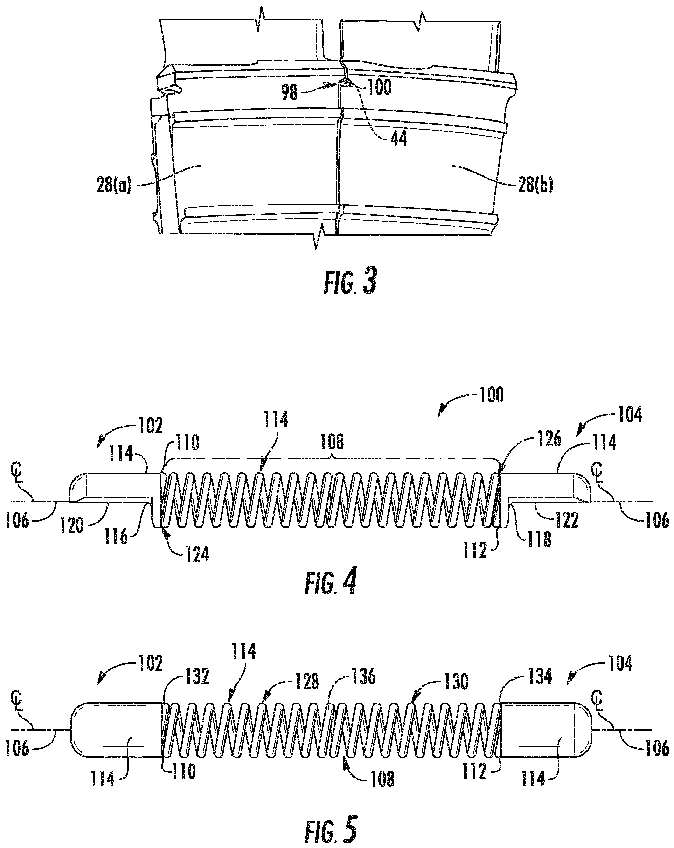

FIG. 2 illustrates a conventional turbine blade or bucket 28 including an airfoil 36, a platform 38, a shank 40 and a dovetail or mounting portion 42. FIG. 3 provides a downstream view of a pair of circumferentially adjacent turbine blades 28(a), 28(b). As shown in FIG. 2, the dovetail 42 is utilized to secure the turbine blade 28 to a periphery of the rotor disk 26 (FIG. 1), as is well understood in the art. The platform 38 defines an inward flow boundary for the combustion gases 34 flowing through the hot gas path 32 of the turbine section 18 (FIG. 1). In various embodiments of the present invention, a damper pin 44 is located along one axial edge (or slash face) 46 adjacent to (i.e., radially inward of) the turbine blade platform 38. It will be appreciated that a similar damper pin 44 is located between each adjacent pair of turbine blades 28(a), 28(b) (FIG. 3) on the rotor disk 26 (FIG. 1) as apparent from FIG. 3. In particular embodiments, as shown in FIG. 2, the damper pin 44 is located in an elongated groove 48 (FIG. 1) that extends along the entire slash face 46 of the turbine blade 28.

The damper pin 44 serves as a vibration damper. When installed, as shown in FIG. 3, the damper pin 44 is positioned between the adjacent turbine blades 28(a), 28(b). In operation, the damper pin 44 frictionally dissipates vibratory energy and reduces corresponding amplitude of vibration. The amount of vibrational energy that is removed by the damper pin 44 is a function several factors including but not limited to the dynamic weight of the damper pin 44, the geometry of the damper pin 44 and the reaction loads between the adjacent turbine blades 28(a), 28(b).

FIG. 4 provides a side view of a comparative example of a damper pin 100. FIG. 5 provides a top view of the damper pin 100 as shown in FIG. 4. It is to be understood that damper pin 100 shown in FIG. 4 may be substituted for damper pin 44 as shown in FIGS. 2 and 3, as a comparative example not according to the invention.

As shown collectively in FIGS. 4 and 5, the damper pin 100 includes a first end portion 102 axially spaced from a second end portion 104 with respect to an axial centerline 106 of the damper pin 100. The first end portion 102 and the second end portion 104 may be coaxially aligned with respect to centerline 106.

As shown in FIGS. 4 and 5, the damper pin 100 further includes a spring member 108 that extends axially from an inner surface 110 of the first end portion 102 to an inner surface 112 of the second end portion 104. The first end portion 102, the spring member 108 and the second end portion 104 define a generally arcuate top portion or surface 114 of the damper pin 100. The top portion 114 is generally configured (shaped and/or sized) to contact with a portion of the groove 48 defined between the adjacent turbine blades 28(a), 28(b).

As shown collectively in FIGS. 4 and 5, the first end portion 102 and/or the second end portion 104 of the damper pin 100 are substantially semi-cylindrical. As shown in FIG. 4, the first end portion 102 and/or the second end portion 104 may include shoulders 116, 118 respectively. This configuration creates flat support surfaces 120, 122 that are adapted to rest on machined turbine blade platform surfaces or shoulders at opposite ends of the groove 48 formed in the turbine blade slash face 46, thereby providing support for the damper pin 100 while preventing undesirable excessive rotation during machine operation.

As shown in FIG. 4, opposing ends 124, 126 of the spring member 108 may be fixedly connected to the first end portion 102 and the second end portion 104 respectively. The opposing ends 124, 126 of the spring member 108 may be engaged with or compressed against the inner surface 110 of the first end portion 102 and/or the inner surface 112 of the second end portion 104.

As shown in FIGS. 4 and 5, the spring member 108 is generally helical shaped. Although the spring member is illustrated in the figures as a helical or coil type spring, it is to be understood by one skilled in the art that the spring member 108 may be any suitable type spring such as but not limited to a wave spring or the like and that the invention is not limited to a helical or coil type spring member unless otherwise provided in the claims.

The spring member 108 may comprise multiple springs coaxially aligned and extending between the first end portion 102 and the second end portion 104. For example, as shown in FIG. 5, the spring member 108 comprises a first spring 128 coaxially aligned with a second spring 130. The first spring 128 may be connected at one end 132 to the first end portion 102 and the second spring 130 may be connected at one end 134 to the second end portion 104. The first and second springs 128, 130 may be engaged at contact point 136 that is defined between the inner surface 110 of the first end portion 102 and the inner surface 112 of the second end portion 104.

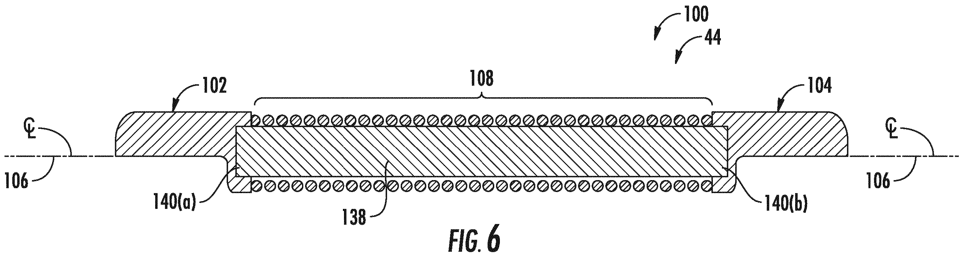

FIG. 6 is a cross sectional side view of an exemplary embodiment of the damper pin 100 according to one embodiment of the present invention. As shown in FIG. 6, the damper pin 100 includes a retention pin 138. The retention pin 138 is coaxially aligned with and disposed between the first end portion 102 and the second end portion 104. The spring member 108 extends circumferentially around the retention pin 138. The retention pin 138 may be seated within openings 140(a), 140(b) defined by the first end portion 102 and the second end portion 104 respectively.

This written description uses examples to disclose the invention, which is solely defined by the claims, and also to enable any person skilled in the art to practice the invention, including making and using any devices or systems and performing any incorporated methods.

## Claims

1. A damper pin (100) for damping adj acent turbine blades coupled to a rotor shaft (24), the damper pin (100) comprising:
a first end portion (102) axially aligned with and axially spaced from a second end portion (104);
a spring member (108) that extends axially from an inner surface of the first end portion (102) to an inner surface of the second end portion (104), wherein the first end portion (102), the spring member (108) and the second end portion (104) define a generally arcuate top portion (114) of the damper pin (100) configured to be disposed within a groove (48) defined between the adjacent turbine blades and to contact with the groove (48);
**characterized in that** the damper pin (100) further comprises a retention pin (138) coaxially aligned with and disposed between the first end portion (102) and the second end portion (104), wherein the spring member (108) extends circumferentially around the retention pin (138).

2. The damper pin (100) as in claim 1, wherein the spring member (108) is helically shaped.

3. The damper pin (100) as in claim 1 or 2, wherein the spring member (108) is connected to at least one of the inner surface of the first end portion (102) or the inner surface of the second end portion (104).

4. The damper pin (100) as in claim 1, 2 or 3, wherein the spring member (108) comprises a first spring (128) and a second spring (130), and wherein the first spring (128) is coaxially aligned with the second spring (130).

5. The damper pin (100) as in claim 4, wherein the first spring (128) is connected at one end to the first end portion (102) and the second spring (130) is connected at one end to the second end portion (104).

6. The damper pin (100) as in any preceding claim, wherein the retention pin (138) is seated within an opening (140a) defined by the first end portion (102).

7. The damper pin (100) as in any preceding claim, wherein the retention pin (138) is seated within an opening (140b) defined by the second end portion (104).

8. The damper pin (100) as in any preceding claim, wherein a portion of the first end portion (102) is semi-cylindrical.

9. The damper pin (100) as in any preceding claim, wherein a portion of the second end portion (104) is semi-cylindrical.

10. A turbine engine (10), comprising:
a rotor shaft (24) that extends axially within the turbine engine (10);
an adjacent pair of turbine blades coupled to the rotor shaft (24), each turbine blade of said adjacent pair of turbine blades at least partially defining a groove (48) that extends along a slash face (46) of said each turbine blade; and
a damper pin (100) as claimed in any preceding claim disposed within the groove (48) and contacting with the groove (48).

## Patentansprüche

1. Dämpferstift (100) zum Dämpfen angrenzender Turbinenschaufeln, die mit einer Rotorwelle (24) gekoppelt sind, der Dämpferstift (100) umfassend:
einen ersten Endabschnitt (102), der mit einem zweiten Endabschnitt (104) axial ausgerichtet und von diesem axial beabstandet ist;
ein Federelement (108), das sich von einer Innenoberfläche des ersten Endabschnitts (102) zu einer Innenoberfläche des zweiten Endabschnitts (104) axial erstreckt, wobei der erste Endabschnitt (102), das Federelement (108) und der zweite Endabschnitt (104) einen im Allgemeinen bogenförmigen oberen Abschnitt (114) des Dämpferstifts (100) definieren, der konfiguriert ist, um innerhalb einer Nut (48), die zwischen den angrenzenden Turbinenschaufeln definiert ist, angeordnet zu werden und mit der Nut (48) in Kontakt zu stehen;
**dadurch gekennzeichnet, dass** der Dämpferstift (100) ferner einen Haltestift (138) umfasst, der mit dem ersten Endabschnitt (102) und dem zweiten Endabschnitt (104) koaxial ausgerichtet ist und zwischen diesen angeordnet ist, wobei sich das Federelement (108) in Umfangsrichtung um den Haltestift (138) erstreckt.

2. Dämpferstift (100) nach Anspruch 1, wobei das Federelement (108) spiralförmig geformt ist.

3. Dämpferstift (100) nach Anspruch 1 oder 2, wobei das Federelement (108) mit mindestens einer von der Innenoberfläche des ersten Endabschnitts (102) oder der Innenoberfläche des zweiten Endabschnitts (104) verbunden ist.

4. Dämpferstift (100) nach Anspruch 1, 2 oder 3, wobei das Federelement (108) eine erste Feder (128) und eine zweite Feder (130) umfasst, und wobei die erste Feder (128) mit der zweiten Feder (130) koaxial ausgerichtet ist.

5. Dämpferstift (100) nach Anspruch 4, wobei die erste Feder (128) an einem Ende mit dem ersten Endabschnitt (102) verbunden ist und die zweite Feder (130) an einem Ende mit dem zweiten Endabschnitt (104) verbunden ist.

6. Dämpferstift (100) nach einem der vorstehenden Ansprüche, wobei der Haltestift (138) innerhalb einer Öffnung (140a), die durch den ersten Endabschnitt (102) definiert ist, sitzt.

7. Dämpferstift (100) nach einem der vorstehenden Ansprüche, wobei der Haltestift (138) innerhalb einer Öffnung (140b), die durch den zweiten Endabschnitt (104) definiert ist, sitzt.

8. Dämpferstift (100) nach einem der vorstehenden Ansprüche, wobei ein Abschnitt des ersten Endabschnitts (102) halbzylindrisch ist.

9. Dämpferstift (100) nach einem der vorstehenden Ansprüche, wobei ein Abschnitt des zweiten Endabschnitts (104) halbzylindrisch ist.

10. Turbinentriebwerk (10), umfassend:
eine Rotorwelle (24), die sich innerhalb des Turbinentriebwerks (10) axial erstreckt;
ein angrenzendes Paar von Turbinenschaufeln, die mit der Rotorwelle (24) gekoppelt sind, wobei jede Turbinenschaufel des angrenzenden Paares von Turbinenschaufeln mindestens teilweise eine Nut (48) definiert, die sich entlang einer Schlitzfläche (46) der Turbinenschaufel erstreckt; und
einen Dämpferstift (100) nach einem der vorstehenden Ansprüche, der innerhalb der Nut (48) angeordnet ist und mit der Nut (48) in Kontakt steht.

## Revendications

1. Goupille d'amortisseur (100) permettant d'amortir des aubes de turbine adjacentes accouplées à un arbre de rotor (24), la goupille d'amortisseur (100) comprenant :
une première partie d'extrémité (102) alignée axialement avec et espacée axialement d'une seconde partie d'extrémité (104) ;
un élément de ressort (108) qui s'étend axialement d'une surface interne de la première partie d'extrémité (102) à une surface interne de la seconde partie d'extrémité (104), dans laquelle la première partie d'extrémité (102), l'élément de ressort (108) et la seconde partie d'extrémité (104) définissent une partie supérieure généralement arquée (114) de la goupille d'amortisseur (100) conçue pour être disposée à l'intérieur d'une rainure (48) définie entre les aubes de turbine adjacentes et pour entrer en contact avec la rainure (48) ;
**caractérisée en ce que** la goupille d'amortisseur (100) comprend en outre une goupille de retenue (138) alignée coaxialement avec et disposée entre la première partie d'extrémité (102) et la seconde partie d'extrémité (104), dans laquelle l'élément de ressort (108) s'étend circonférentiellement autour de la goupille de retenue (138).

2. Goupille d'amortisseur (100) selon la revendication 1, dans laquelle l'élément de ressort (108) est de forme hélicoïdale.

3. Goupille d'amortisseur (100) selon la revendication 1 ou 2, dans laquelle l'élément de ressort (108) est relié à au moins l'une parmi la surface interne de la première partie d'extrémité (102) ou la surface interne de la seconde partie d'extrémité (104).

4. Goupille d'amortisseur (100) selon la revendication 1, 2 ou 3, dans laquelle l'élément de ressort (108) comprend un premier ressort (128) et un second ressort (130), et dans laquelle le premier ressort (128) est aligné coaxialement avec le second ressort (130).

5. Goupille d'amortisseur (100) selon la revendication 4, dans laquelle le premier ressort (128) est relié au niveau d'une extrémité de la première partie d'extrémité (102) et le second ressort (130) est relié au niveau d'une extrémité de la seconde partie d'extrémité (104).

6. Goupille d'amortisseur (100) selon l'une quelconque revendication précédente, dans laquelle la goupille de retenue (138) est logée à l'intérieur d'une ouverture (140a) définie par la première partie d'extrémité (102).

7. Goupille d'amortisseur (100) selon l'une quelconque revendication précédente, dans laquelle la goupille de retenue (138) est logée à l'intérieur d'une ouverture (140b) définie par la seconde partie d'extrémité (104).

8. Goupille d'amortisseur (100) selon l'une quelconque revendication précédente, dans laquelle une partie de la première partie d'extrémité (102) est semi-cylindrique.

9. Goupille d'amortisseur (100) selon l'une quelconque revendication précédente, dans laquelle une partie de la seconde partie d'extrémité (104) est semi-cylindrique.

10. Moteur à turbine (10), comprenant :
un arbre de rotor (24) qui s'étend axialement à l'intérieur du moteur à turbine (10) ;
une paire adjacente d'aubes de turbine accouplées à l'arbre de rotor (24), chaque aube de turbine de ladite paire adjacente d'aubes de turbine définissant au moins partiellement une rainure (48) qui s'étend le long d'une face oblique (46) de ladite chaque aube de turbine ; et
une goupille d'amortisseur (100) selon l'une quelconque revendication précédente, disposée à l'intérieur de la rainure (48) et en contact avec la rainure (48).
